# EUROPÄISCHE PATENTSCHRIFT

(11) **EP 1 737 691 B1**
(45) Veröffentlichungstag und Bekanntmachung des Hinweises auf die Patenterteilung: **22.05.2013**
(21) Anmeldenummer: 05733838.6
(22) Anmeldetag: 17.03.2005
(51) Int. Cl.: B60J 7/14, B60J 7/20

(54) **SCHWENKBARES FAHRZEUGDACH**
PIVOTABLE VEHICLE ROOF
TOIT DE VEHICULE BASCULANT

(30) Priorität: 01.04.2004 DE 102004016202
(43) Veröffentlichungstag der Anmeldung: 03.01.2007
(73) Patentinhaber: Valmet Automotive Oy, 23500 Uusikaupunki (FI)
(72) Erfinder: KRACHT, Andre, 49076 Osnabrück (DE)
(74) Vertreter: Kronthaler, Schmidt & Coll.
(86) Internationale Anmeldenummer: PCT/DE2005/000484
(87) Internationale Veröffentlichungsnummer: WO 2005/095139

(56) Entgegenhaltungen:
- EP-A- 1 352 768
- DE-A1- 4 028 712
- GB-A- 783 345
- GB-A- 2 194 759
- US-A- 3 823 977
- PATENT ABSTRACTS OF JAPAN Bd. 012, Nr. 052 (M-668), 17. Februar 1988 (1988-02-17) -& JP 62 198517 A (NISSAN MOTOR CO LTD), 2. September 1987 (1987-09-02)

## Beschreibung

Die Erfindung betrifft ein Fahrzeugdach, das insbesondere für einen Personenkraftwagen verwendbar ist. Die Erfindung ist insbesondere auf ein Fahrzeugdach gerichtet, das zwischen einer offenen und einer geschlossenen Position schwenkbar ist.

Solche Fahrzeugdächer werden insbesondere als Hardtop-Dächer, d.h. starre Dächer, eingesetzt, um ein Fahrzeug von einem geschlossenen Personenkraftwagen in einen offenen PkW und umgekehrt umzuwandeln.

In der Technik sind ausschwenkbare Fahrzeugdächer für Personenkraftwagen bekannt, wobei die Fahrzeugdächer in der offenen Position des Dachs im allgemeinen entweder im Inneren des Heckbereichs des Fahrzeugs aufbewahrt werden oder auf dem Heckraum des Fahrzeugs ablegbar sind. Wird das Fahrzeugdach in den Heckraum des Fahrzeugs eingebracht, so sind aufwendige Kinematiken erforderlich, um das Fahrzeugdach zu verstauen bzw. aus der offenen Position wieder in die geschlossene Position des Fahrzeugdachs zu bewegen.

Daher schlägt die DE 3635887 A1 ein schwenkbares Fahrzeugdach vor, das nach dem Öffnen auf dem hinteren Heckdeckel des Personenkraftwagens ablegbar ist. Das Fahrzeugdach besteht aus einer Einheit, die das Rückfenster und ein Dach enthält und ein Gelenk am Übergang des Rückfensters zum Heckdeckel sowie am Übergang zwischen Dach und Rückfenster Gelenke besitzt. Diese Gelenke dienen dazu, zusammen mit Schwenkarmpaaren das Dach während seiner Öffnungs- und Schließbewegung parallel zu sich selbst zu führen und zu bewegen. Das Dach wird anschließend in der offenen Position im zusammengefalteten Zustand auf dem Deckel des Heckraums abgelegt. Um eine gleichbleibende Silhouette des Fahrzeugs im Bereich des Heckraums sowohl im offenen als auch im geschlossenen Zustand des Fahrzeugdachs zu erreichen, wird beim Ablegen der Einheit aus Rückfenster und Dach der Deckel des Heckraums um etwa die Dicke dieser Einheit abgesenkt, so dass das über dem Heckdeckel abgelegte Fahrzeugdach in seiner Offenstellung etwa auf der Höhe zu liegen kommt, auf der bei geschlossenem Fahrzeugdach der Heckdeckel des Heckraums angeordnet ist. Durch die Absenkung eines Teils des Heckdeckels des Fahrzeugs wird somit sowohl im offenen als auch im geschlossenen Zustand des Fahrzeugs sichergestellt, dass die äußere Silhouette des Fahrzeugs im Heckbereich im wesentlichen unverändert bleibt.

Aus der EP 0901421 B1 ist ein Motorfahrzeug mit einem steifen Dach bekannt, wobei das Fahrzeugdach zwischen einer offenen und einer geschlossenen Position schwenkbar ist. In der offenen Position ist das einteilige Fahrzeugdach auf dem Heckbereich des Kraftfahrzeugs ablegbar. Im geöffneten Zustand wird das Dach insbesondere auf dem Kofferraumdeckel des Fahrzeugs abgelegt. Die Anordnungen der Schwenkachse, um die das Fahrzeugdach drehbar ist, und der Schwenkachse des Kofferraumdeckels sind derart gewählt, dass sie zusammenfallen, wodurch der Kofferraumdeckel bei geöffnetem Fahrzeugdach aufgeschwenkt und geöffnet werden kann.

Aus der GB 783,345 A ist ein Dach mit einem vorderen Dachteil und einem hinteren Dachteil bekannt, wobei das hintere Dachteil um eine horizontale Achse karosseriefest angelenkt ist und die beiden Dachteile um eine Achse zueinander schwenkbar sind, welche in einem geschlossenen Dachzustand in einem zueinander weisenden Bereich der Dachteile angeordnet ist. Die Dachteile werden in offenem Dachzustand auf einem Heckdeckel abgelegt, wobei das vordere Dachteil hierbei oberhalb des hinteren Dachteils angeordnet ist und eine bei geschlossenem Dach nach oben weisende Seite des vorderen Dachteils auch bei offenem Dach nach oben weist.

Es ist die Aufgabe der Erfindung, ein Fahrzeugdach für Personenkraftwagen vorzusehen, das zwischen einer offenen und einer geschlossenen Position schwenkbar ist, mit Hilfe dessen der Charakter des Fahrzeugs von einem Pickup-ähnlichen Fahrzeug bei geschlossenem Dach in ein Cabrioletfahrzeug verändert werden kann, wobei ein Heckdeckel bei offenem Dach ohne vorherige vollständige Dachschließung geöffnet werden kann.

Diese Aufgabe wird mit einem Fahrzeugdach mit den Merkmalen des Anspruchs 1 gelöst. Bevorzugte Ausführungsformen sind durch die abhängigen Ansprüche angegeben. Der Erfindung liegt der Gedanke zugrunde, den Heckdeckel des Fahrzeugs mit einer Mulde zu versehen, so dass bei geschlossenem Fahrzeugdach der Heckbereich des Fahrzeugs einem Pickupfahrzeug ähnlich ist. Gleichzeitig wird durch die doppelte Faltung des Fahrzeugdachs, d.h. die zweiteilige Gestaltung des Fahrzeugdachs und die Schwenkbarkeit der beiden Teile des Fahrzeugdachs zueinander sowie zusammen um eine heckseitig liegende Achse, erreicht, dass die konvexe Wölbung des vorderen Dachteils im offenen Zustand des Fahrzeugdachs die Außenhaut des Heckbereichs bildet. Durch geeignete Anpassung der geometrischen Abmessungen des vorderen konvexen Dachteils, das im geöffneten Zustand des Fahrzeugdachs die Außenhaut des Heckbereichs bildet, sowie der Abmessungen, insbesondere der Höhe der schwenkbaren Einheit, an die Abmessungen der Mulde des Heckdeckels wird der Charakter des Fahrzeugs bei geöffnetem Fahrzeugdach in den eines Cabrioletfahrzeugs ohne Pickupheck verändert, da der Übergang zwischen Heckdeckel und Dachbereich gleichmäßig, d.h. ohne deutliche Stufen oder ungewöhnliche Krümmungsradiusänderungen ist.

Die im Heckbereich des Fahrzeugs gebildete Mulde bzw. Vertiefung kann wahlweise in den Heckdeckel des Fahrzeugs integriert sein, d.h. dass Seitenränder der Mulde im Heckdeckel selbst ausgebildet sind. Alternativ ist es auch denkbar, die Seitenränder der Mulde außerhalb des Heckdeckels auszubilden, so dass der Heckdeckel nur den Boden der Vertiefung und die rückwärtige Seitenwand der Vertiefung bildet.

Nachfolgend wird die Erfindung beispielhaft anhand der beigefügten Figuren beschrieben, in denen
- Fig. 1: eine perspektivische Ansicht eines Fahrzeugs mit einer erfindungsgemäßen Dachstruktur ist, wobei das Fahrzeugdach in der geschlossenen Position ist;
- Fig. 2: eine Seitenansicht des Fahrzeugs aus Fig. 1 ist;
- Fig. 3: das erfindungsgemäße Fahrzeugdach beim Schwenken in eine offene Position in perspektivischer Ansicht zeigt;
- Fig. 4: das Fahrzeug mit dem Fahrzeugdach aus Fig. 3 in seitlicher Ansicht zeigt;
- Fig. 5: das Fahrzeug aus Fig. 1 bis 4 in perspektivischer Ansicht zeigt, wobei das Fahrzeugdach in der offenen Position ist; und
- Fig. 6: das Fahrzeug aus Fig. 5 in seitlicher Ansicht zeigt.

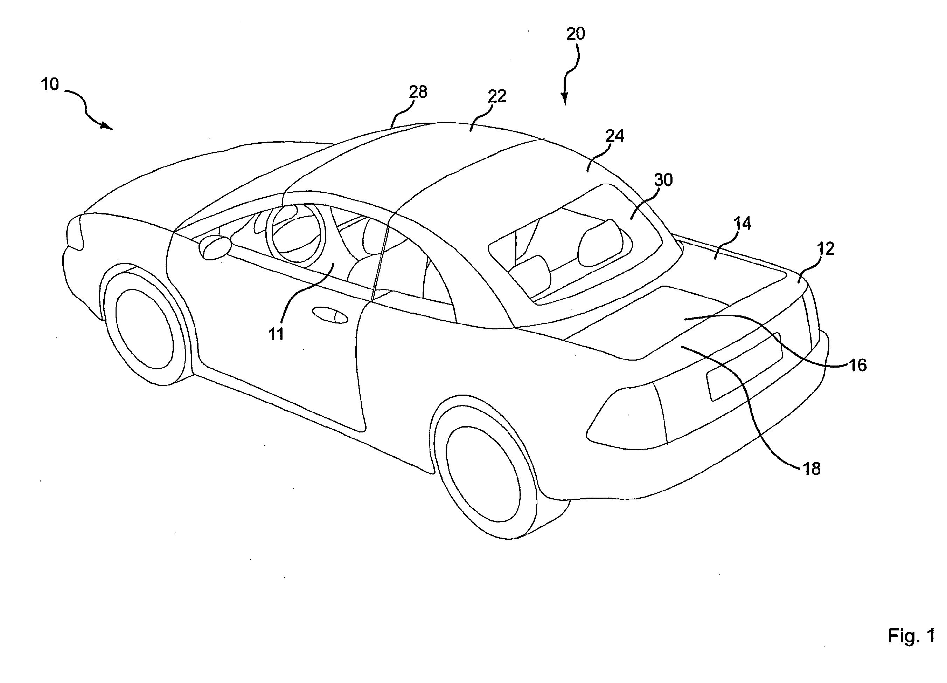

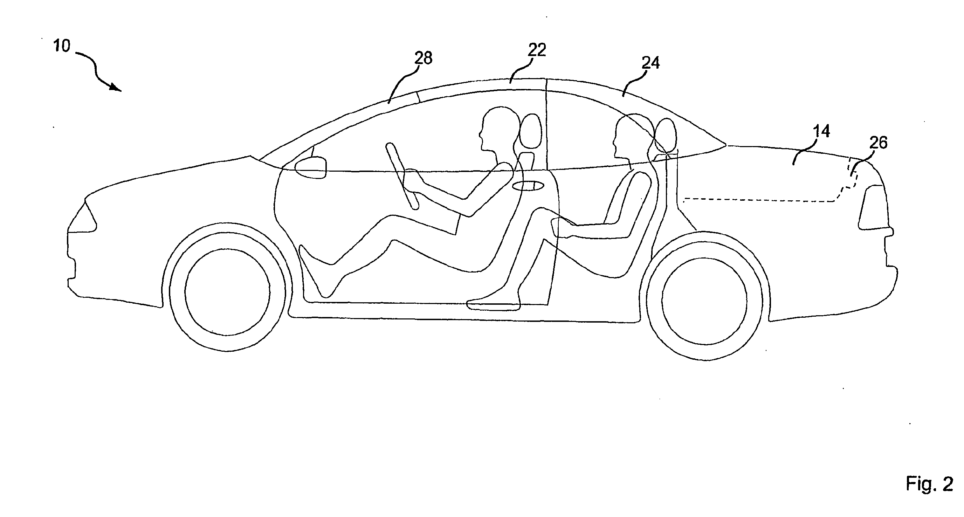

In Fig. 1 bis Fig. 6 ist ein Fahrzeug 10 dargestellt, das ein erfindungsgemäßes Fahrzeugdach 20 besitzt. In Fig. 1 und Fig. 2 ist das Fahrzeugdach 20, das zwischen einer offenen Position und einer geschlossenen Position bewegbar ist, in der geschlossenen Postition.

Das Fahrzeugdach 20 besitzt ein vorderes Dachteil 22 und ein rückwärtiges Dachteil 24. Die Ausdrücke "vorne", "hinten", "rückwärts" usw. beziehen sich dabei jeweils auf die Vorwärtsfahrtrichtung des Fahrzeugs 10.

Das vordere Dachteil 22 weist ebenso wie das rückwärtige Dachteil 24 eine konvexe Wölbung auf, wenn es in der geschlossenen Position ist. In dieser geschlossenen Position überdachen das vordere Dachteil 22 und das rückwärtige Dachteil 24 den Fahrgastraum 11 des Fahrzeugs, so dass ein geschlossenes Personenkraftfahrzeug gebildet wird. Insbesondere erstrecken sich die Dachteile somit von einem Windschutzscheibenrahmen 28 bis zu einem Heckbereich des Fahrzeugs 10. Im rückwärtigen oder hinteren Dachteil 24 ist ferner bevorzugter Weise eine Heckscheibe 30 integriert.

Das vordere Dachteil 22 ist bezüglich des rückwärtigen Dachteils 24 um eine erste Achse A1, die im wesentlichen senkrecht zu einer Fahrzeuglängsebene verläuft und an Scharnierpunkten zwischen dem vorderen Dachteil 22 und dem rückwärtigen Dachteil 24 liegt, schwenkbar. Dadurch kann das vordere Dachteil auf das rückwärtige Dachteil gefaltet werden.

Außerdem ist eine zweite Schwenkachse A2 vorgesehen, um die beide Dachteile 22, 24 zum Öffnen bzw. Schließen des Fahrzeugdachs geschwenkt werden können. Diese zweite Achse A2 kann mit einer Schwenkachse zusammenfallen, um die ein Heckdeckel 12 des Fahrzeugs 10 zum Öffnen des Kofferraums des Fahrzeugs aufgeschwenkt wird. Sie verläuft ebenfalls senkrecht zur Fahrzeuglängsebene und z.B. heckseitig des hinteren Dachteils, d.h. im Verbindungsbereich zwischen Dachteil und Kofferraumdeckel.

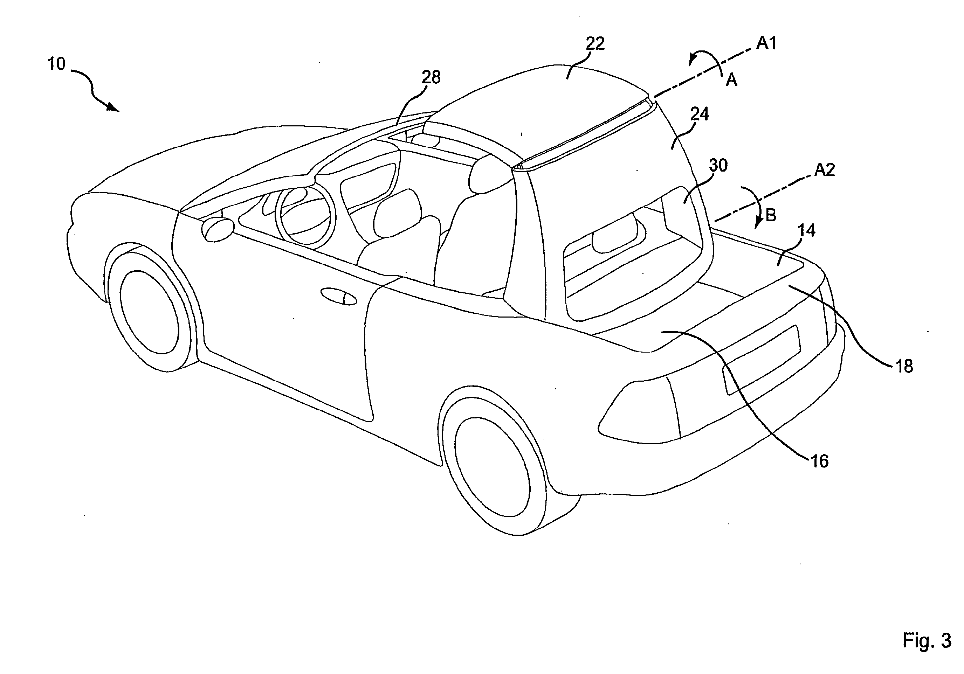

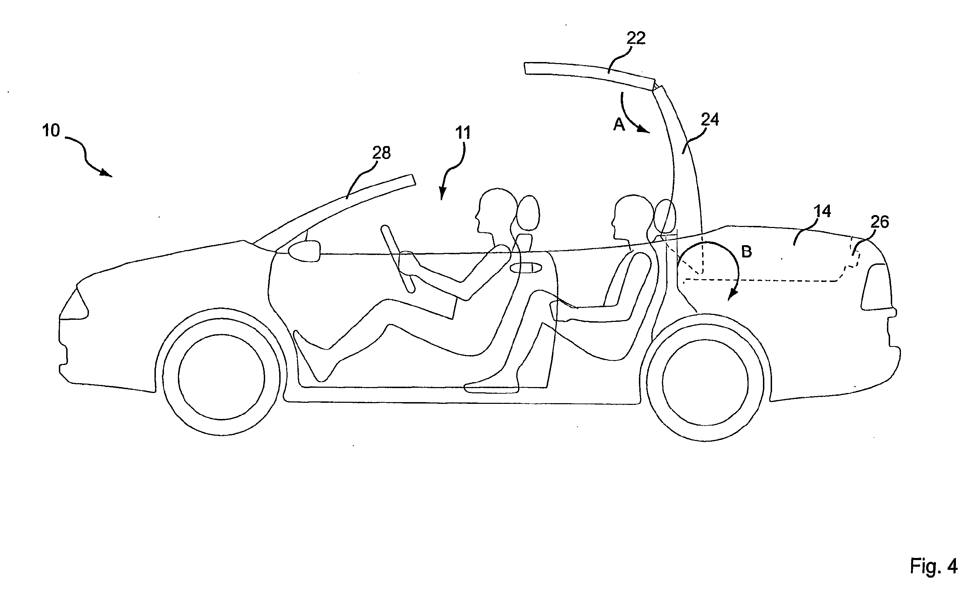

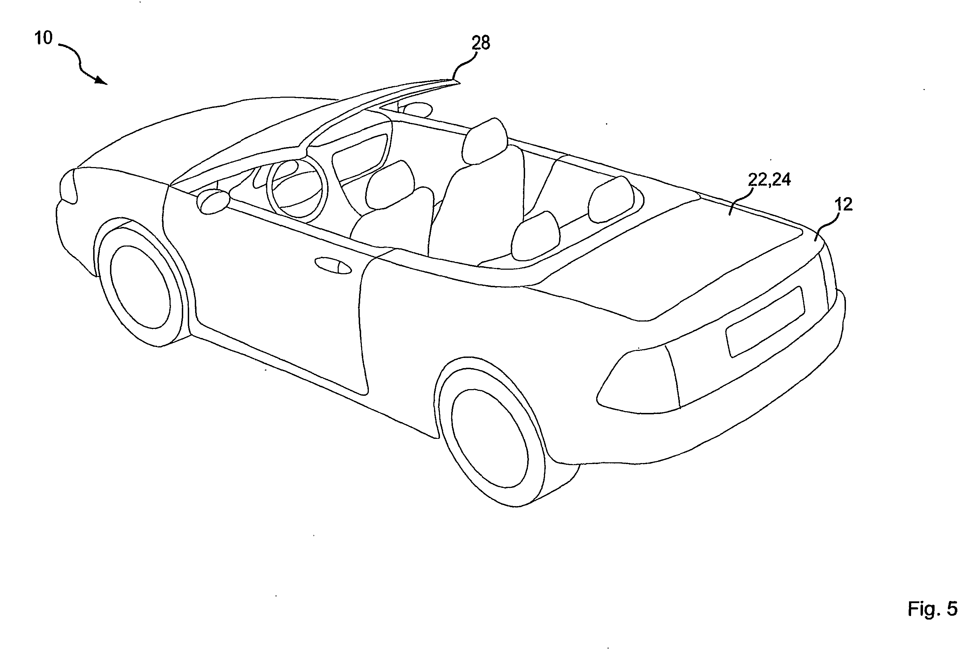

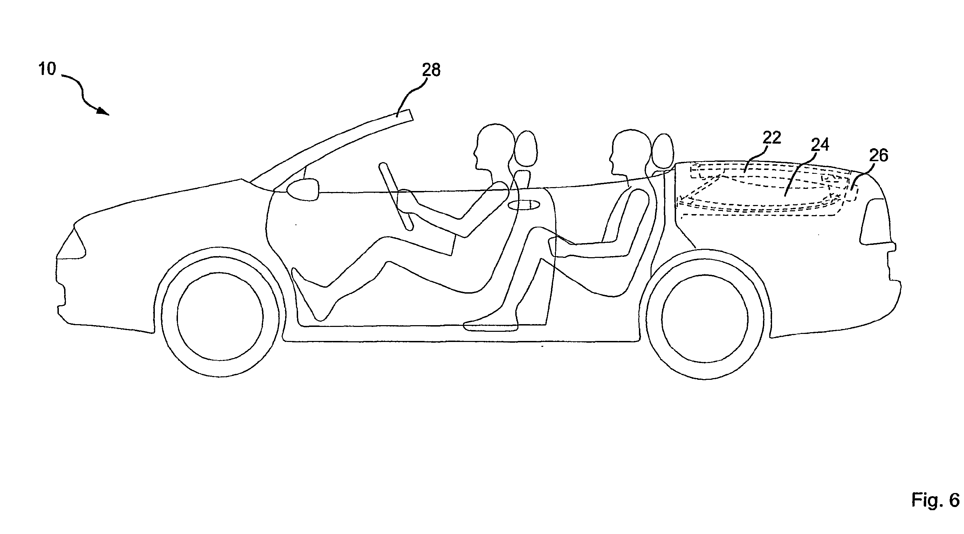

Zum Öffnen des Fahrzeugdachs 20 aus der geschlossenen Position in die in Fig. 5 und 6 gezeigte offene Position wird das vordere Dachteil 22 vom Windschutzscheibenrahmen gelöst und um die erste Achse A1 gegen den Uhrzeigersinn in seitlicher Ansicht von der linken Seite des Fahrzeugs bezüglich des rückwärtigen Dachteils 24 verschwenkt (Pfeil A in Fig. 3 und Fig. 4). Außerdem werden das vordere Dachteil 22 und das rückwärtige Dachteil 24 zusammen um die zweite Achse A2 im Uhrzeigersinn (Pfeil B in Fig. 3 und Fig. 4) verschwenkt, so dass einerseits das rückwärtige Dachteil 24 unter dem vorderen Dachteil 22 zu liegen kommt und andererseits die beiden Innenflächen des vorderen Dachteils bzw. des rückwärtigen Dachteils 24 aufeinander gerichtet sind. Dies bedeutet, dass die konvexe Außenseite des vorderen Dachteils 22 in der offenen Position des Fahrzeugdachs 20 nach außen zeigt.

In dieser offenen Position des Fahrzeugdachs 20 können die Dachteile 22, 24 in eine Mulde oder Vertiefung 14 abgelegt werden, die im Heckbereich des Fahrzeugs 10 ausgebildet ist. In den Figuren ist dargestellt, dass eine Mulde 14 im Heckdeckel 12 des Fahrzeugs ausgebildet ist, d.h. dass der Heckdeckel 12 des Fahrzeugs eine Bodenfläche 16 sowie diese Bodenfläche umgebende Seitenwände sowie eine Rückwand 18 a-ufweist. Die Seitenwände können statt im Heckdeckel L 2 auch im angrenzend an den Heckdeckel 12 ausgebildete Kotflügelbereich des Fahrzeugs vorgesehen sein, so dass der Heckdeckel 12 über seine gesamte Breite bezüglich des angrenzenden Kotflügelbereichs vertieft ist. Die Rückwand 18 sowie die Seitenwände erheben sich über die Bodenfläche 16 in einer Höhe, die der Höhe der Einheit aus zusammengeklapptem vorderem Dachteil 22 und rückwärtigem Dachteil 24 entspricht, so dass die konvexe Außenfläche des vorderen Dachteils 22 sowohl zur Rückwand 18 als auch zu den Seitenwänden einen gleichmäßigen Übergang ohne Stufen bildet, d.h. bündig ist, wenn das Fahrzeugdach in der Mulde 14 des Heckdeckels 12 abgelegt ist. Vorzugsweise entspricht am Übergang zwischen Dacheinheit und Heckdeckel bzw. Kotflügel die Krümmung der konvexen Außenfläche des vorderen Dachteils 22 der Krümmung der Erhebungen des Heckdeckels 12, d.h. der Rückwand 18 bzw. der Seitenwände, so dass ein stetiger Übergang erzielt wird.

Vorzugsweise sind die Dachteile 22, 24 als Hardtopdachteile, d.h. starre Dachteile, ausgebildet.

Die Dachteile 22, 24 können manuell oder elektrisch und/oder hydraulisch unterstützt bzw. vollautomatisch elektrisch und/oder hydraulisch betätigt werden. Zur Bewegung der Dachteile sind beispielsweise geeignete Gestängemechanismen vorgesehen, die an sich bekannt sind.

Wird die Schwenkachse A2, d.h. die Achse mit der das vordere Dachteil und das rückwärtige Dachteil zusammen bezüglich der Fahrzeugkarosserie und/oder des Heckdeckels 12 des Fahrzeugs verschwenkt werden, zusammenfallend mit der Schwenkachse des Heckdeckels 12 vorgesehen, so kann der Heckdeckel bewegt werden und der Kofferraum geöffnet werden, wenn das Fahrzeugdach 20 in der auf dem Heckdeckel 12 abgelegten Position ist. Fallen die Achsen jedoch nicht zusammen, so wird vorzugsweise ein Verriegelungsmechanismus vorgesehen, damit der Heckdeckel bei abgelegten Dach nicht geöffnet werden kann. Der Verriegelungsmechanismus kann wiederum beispielsweise als mechanische Verriegelung und/oder elektrisch unterstützte Verriegelung ausgeführt sein. Alternativ zu einem Verriegelungsmechanismus, der ein Öffnen des Heckdeckels 12 verhindert, wenn das Fahrzeugdach 20 in der offenen Position ist, kann eine Betätigung einer Öffnungstaste oder eines Öffnungsgriffs für den Heckdeckel eine Bewegung des Dachs im zusammengefalteten Zustand auslösen, ehe der Heckdeckel 12 aufgeschwenkt wird. Dabei wird das Dach vorzugsweise im zusammengefalteten Zustand in eine vertikale Position gebracht, d.h. eine Position in der das vordere Dachteil 22 und das rückwärtige Dachteil 24 im wesentlichen senkrecht stehen. Diese Position liegt vorzugsweise vor dem Heckdeckel 12. Nachdem die Einheit aus zusammengefaltetem vorderen Dachteil 22 und rückwärtigem Dachteäl 24 in diese Position gebracht ist, kann der Heckdeckel 12 durch normales Verschwenken anschließend geöffnet werden. Außerdem ist in allen varianten ein Öffnen des Heckdeckels 12 möglich, ohne vorherige Bewegungen des Fahrzeugdachs 20 zu initiieren, wenn das Fahrzeugdach 20 in der geschlossenen Position ist.

Die Anordnung mit auffaltbarem Hardtopdach 20 beinhaltet ferner einen in den Heckdeckel 12 integrierten Verrriegelungsmechanismus. Die Verriegelung ist vorzugsweise in der Rückwand 18 und/oder den Seitenwänden des Heckdeckels 12 integriert und dient dazu, das vordere Dachteil 22 und das rückwärtige Dachteil 24 in der gefalteten Position und der in der Mulde 14 des Heckdeckels 12 abgelegten Position sicher zu halten. Diese Verriegelung 26 wirkt beispielsweise mit dem Gestängemechanismus zusammen, der die Öffnungs- und Schließbewegung des Fahrzeugdachs 20 führt.

Durch die erfindungsgemäße Dachkonstruktion wird ein Fahrzeug 10 mit einem Fahrzeugdach 20 geschaffen, das bei geschlossenem Dach 20 eine Vertiefung im Heckdeckel 12 aufweist. Diese Vertiefung ist in die Gesamtsilhouette des Fahrzeugs als Fahrzeug mit Pickup-Charakter integriert. Bei offenem Dach 20 bildet die vordere Dachhälfte bzw. der vordere Dachbereich des abgelegten Dachs mit dem Heckdeckel die Außenhaut eines flach gewölbten Deckels, d.h. Heckbereichs. Durch das Zusammenfalten des Dachs und das Ablegen des Dachs auf dem Heckdeckel 12 wird ein aufwändiger Mechanismus zum Einbringen des zusammengefalteten Dachs unter den Heckdeckel vermieden.

### Bezugszeichen

| | | | |
|---|---|---|---|
| 10 | Fahrzeug | 11 | Fahrgastraum |
| 12 | Heckdeckel | 14 | Vertiefung |
| 16 | Bodenfläche | 18 | Rückwand |
| 20 | Fahrzeugdach | 22 | vorderes Dachteil |
| 24 | rückwärtiges Dachteil | 26 | Verriegelung |
| 28 | Windschutzscheibenrahmen | 30 | Heckscheibe |
| | | | |
| A1 | erste Achse | | |
| A2 | zweite Achse | | |

## Patentansprüche

1. Fahrzeugdach (20), insbesondere für Personenkraftwagen, das zwischen einer offenen und einer geschlossenen Position schwenkbar ist, enthaltend ein vorderes Dachelement (22),
ein hinteres Dachelement (24) sowie eine unveränderliche, nach oben offene Ablage (14) für die Dachelemente an einem Heckdeckel (12) des Fahrzeugs, wobei das vordere Dachelement (22) in der offenen Position des Fahrzeugsdachs (20) auf dem hinteren Dachelement (24) und mit diesem in der Ablage (14) ablegbar ist, **dadurch gekennzeichnet, dass** die Ablage (14) vertieft ist und das vordere Dachelement (22) mit dem Heckdeckel (12) eine gewölbte Außenhaut bildet, wobei die Dachelemente (22, 24) in der offenen Position im Wesentlichen vollständig in die Ablage (14) aufgenommen sind, und wobei ein Öffnungsmechanismus für den Heckdeckel (12) vorgesehen ist, der die auf dem Heckdeckel abgelegten, zusammengefalteten Dachelemente (22, 24) in eine vertikale Position vor dem Heckdeckel bringt, ehe der Heckdeckel geöffnet wird.

2. Fahrzeugdach (20) nach Anspruch 1, **dadurch gekennzeichnet, dass** die Ablage durch eine Vertiefung (14) im Heckdeckel (12) gebildet ist.

3. Fahrzeugdach (20) nach Anspruch 1 oder 2, **dadurch gekennzeichnet, dass** die Ablage (14) im Heckdeckel durch seitliche Erhebungen sowie eine heckseitige Erhebung (18) derart begrenzt ist, dass die Erhebungen mit dem Aussenumfang des vorderen Dachelements (22) fluchten, wenn das Dachelement in der Ablage liegt.

4. Fahrzeugdach (20) nach einem der vorhergehenden Ansprüche, **dadurch gekennzeichnet, dass** eine Verriegelungseinrichtung für den Heckdeckel (12) vorgesehen ist, die ein Öffnen des Heckdeckels nur erlaubt, wenn das Fahrzeugdach (20) in der geschlossenen Position ist.

5. Fahrzeugdach (20) nach einem der vorhergehenden Ansprüche, **dadurch gekennzeichnet, dass** die Dachelemente (22, 24) starre Dachelemente sind.

6. Fahrzeugdach (20) nach einem der vorhergehenden Ansprüche, **dadurch gekennzeichnet, dass** das vordere Dachelement (22) bezüglich des hinteren Dachelements (24) um eine erste Achse (A1) verschwenkbar ist, die im Wesentlichen senkrecht zur Fahrzeuglängsebene angeordnet ist, und
das vordere und das hintere Dachelement zusammen um eine zweite Achse (A2) verschwenkbar sind, die senkrecht zur Fahrzeuglängsebene verläuft.

## Claims

1. A vehicle roof (20), in particular for motor cars, which roof can be pivoted between an open position and a closed position and which comprises
a front roof element (22),
a rear roof element (24), as well as an unchangeable stowage compartment (14), open at the top, for the roof elements on a rear cover (12) of the vehicle, wherein the front roof element (22) can be stowed on the rear roof element (24) and both elements can be stowed together in the stowage compartment (14) in the open position of the vehicle roof (20), **characterised in that** the stowage compartment (14) is recessed and the front roof element (22) forms an arched outer skin with the rear cover (12), said roof elements (22, 24) being received substantially completely in the stowage compartment (14) in the open position, and an opening mechanism being provided for the rear cover (12), which brings the folded roof elements (22, 24), stowed on the rear cover, into a vertical position in front of the rear cover before opening the rear cover.

2. The vehicle roof (20) according to claim 1, **characterised in that** the stowage compartment is formed by a recess (14) in the rear cover (12).

3. The vehicle roof (20) according to claim 1 or 2, **characterised in that** the stowage compartment (14) in the rear cover is limited by lateral elevations and a rear elevation (18) such that the elevations are aligned with the outer circumference of the front roof element (22) when the roof is arranged in the stowage compartment.

4. The vehicle roof (20) according to any one of the preceding claims, **characterised in that** a locking device is provided for the rear cover (12), said locking device allowing the rear cover to be opened only when the vehicle roof (20) is in the closed position.

5. The vehicle roof (20) according to any one of the preceding claims, **characterised in that** the roof elements (22, 24) are rigid roof elements.

6. The vehicle roof (20) according to any one of the preceding claims, **characterised in that** the front roof element (22) is pivotable with respect to the rear roof element (24) about a first axis (A1) which is substantially perpendicular to the longitudinal vehicle plane, and
the front and rear roof elements are jointly pivotable about a second axis (A2) which is perpendicular to the longitudinal vehicle plane.

## Revendications

1. Toit de véhicule (20), notamment de voiture, que l'on peut faire pivoter entre une position ouverte et une position fermée et qui comprend
un élément de toit avant (22),
un élément de toit arrière (24), ainsi qu'un compartiment de rangement (14) invariable pour les éléments de toit, qui est ouvert vers le haut et est disposé sur un couvercle arrière (12) du véhicule, l'élément de toit avant (22) pouvant être déposé sur l'élément de toit arrière (24) et, ensemble avec ce dernier, dans le compartiment de rangement (14) lorsque le toit de véhicule (20) se trouve en position ouverte, **caractérisé en ce que** le compartiment de rangement (14) est approfondi et l'élément de toit avant (22), en combinaison avec le couvercle arrière (12), constitue une peau extérieure arquée, lesdits éléments de toit (22, 24), en position ouverte, étant logés de manière sensiblement complète dans le compartiment de rangement (14), et un mécanisme d'ouverture étant prévu pour le couvercle arrière (12), ce mécanisme amenant les éléments de toit (22, 24), déposés sur le couvercle arrière et pliés, vers une position verticale en avant du couvercle arrière avant d'ouvrir le couvercle arrière.

2. Toit de véhicule (20) selon la revendication 1, **caractérisé en ce que** le compartiment de rangement est constitué par un approfondissement (14) dans le couvercle arrière (12).

3. Toit de véhicule (20) selon la revendication 1 ou 2, **caractérisé en ce que** le compartiment de rangement (14) dans le couvercle arrière est délimité par des élévations latérales et une élévation arrière (18) de sorte que lesdites élévations soient alignées avec la circonférence extérieure de l'élément de toit avant (22) lorsque le toit est déposé dans le compartiment de rangement.

4. Toit de véhicule (20) selon l'une quelconque des revendications précédentes, **caractérisé en ce que** l'on prévoit un dispositif de verrouillage pour le couvercle arrière (12), ledit dispositif de verrouillage ne permettant l'ouverture du couvercle arrière que lorsque le toit de véhicule (20) se trouve en position fermée.

5. Toit de véhicule (20) selon l'une quelconque des revendications précédentes, **caractérisé en ce que** les éléments de toit (22, 24) sont des éléments de toit rigides.

6. Toit de véhicule (20) selon l'une quelconque des revendications précédentes, **caractérisé en ce que** l'on peut faire pivoter l'élément de toit avant (22) par rapport à l'élément de toit arrière (24) autour d'un premier axe (A1) qui est sensiblement perpendiculaire au plan longitudinal du véhicule, et
que l'on peut faire pivoter les éléments de toit avant et arrière ensemble autour d'un deuxième axe (A2) qui est perpendiculaire au plan longitudinal du véhicule.
